# EUROPEAN PATENT SPECIFICATION

(11) **EP 0 393 226 B1**
(45) Date of publication and mention of the grant of the patent: **04.08.1993**
(21) Application number: 89107258.9
(22) Date of filing: 21.04.1989
(51) Int. Cl.: C04B 35/00

(54) **A method of manufacturing ceramic products, in particular, a method of manufacturing ceramic springs**
Verfahren zur Herstellung von keramischen Produkten, insbesondere von keramischen Federn
Procédé de fabrication de produits céramiques notamment de ressorts

(43) Date of publication of application: 24.10.1990
(73) Proprietor: NHK SPRING CO., Ltd., Yokohama-shi (JP)
(72) Inventor: Adachi, Takaji, Yokohama-shi (JP); Nakatani, Masahiko, Yokosuka-shi Kanagawa-ken (JP); Sato, Shigemi, Yokohama-shi (JP); Higashino, Toyoyuki, Yokohama-shi (JP); Nomura, Suguru, Komagane-shi Nagano-ken (JP); Adachi, Ryusuke, Yokohama-shi (JP)
(74) Representative: Prüfer, Lutz H., Dipl.-Phys.

(56) References cited:
- US-A- 4 104 345
- DATABASE DERWENT WORLD PATENT INDEX, acc. no. 89-169528/23; & JP-A-1 110 909 (NHK SPRING K.K.) 27-04-1989
- DATABASE DERWENT WORLD PATENT INDEX, acc. no. 87-052899/08; & JP-A-62 007 659 (MEIWA KOGYO K.K.) 14-01-1987
- E. Ryshkewitch et al., Oxide Ceramics, General Ceramics and Academic Press, 1985, USA, p. 40-43

## Description

The present invention relates to a method of manufacturing ceramic products, to a method of manufacturing a ceramic coil spring, and a method of manufacturing a ceramic coned disk or leaf spring.

Ceramic products are greatly resistant to heat, corrosion, and wearing. However, sintered ceramic products scarcely undergo plastic deformation. They are hard and brittle, and are extremely difficult to machine. Hence, when sintered ceramic bodies are machined into products of desired shapes, the resultant product will inevitably be expensive due to the cost of machining the sintered ceramic bodies.

To manufacture ceramic products at low cost, ceramic bodies should be machined as little as possible once they have been sintered. To this end, a mixture of ceramic materials are first shaped, or shaped and calcined, and then machined.

Various methods of shaping ceramic materials have been used, in accordance with the mechanical and physical properties which ceramic products should have, and also in accordance with the cost at which the products should be made. Among these methods are: slip casting, die pressing, isostatic pressing, injection molding, extruding, and doctor-blade method.

Die pressing is advantageous in two respects. First, it can make shaped products greatly precise in size. Secondly, it can manufacture shaped products with a high efficiency, and thus is suitable for mass production. However, die pressing is accompanied with several problems: (i) the shaped products by this method are likely to fail to have a uniform density; (ii) the method requires very hard dies; (iii) the dies required in the method are very expensive; and (iv) a high pressure must be applied in this method.

Isostatic pressing is advantageous in two respects. First, a pressure is applied on a ceramic mixture body uniformly, and the resultant shaped products can hardly fail to have a uniform density. Secondly, rubber molds, which are inexpensive, can suffice. Isostatic pressing is, however, disadvantageous in that the shaped products have rough surfaces, unlike those made by die pressing, and must be subjected to machining.

From E. Ryshkewitch et al. oxyde ceramics, general ceramics and academic press, 1985, USA, pages 40 to 43 a method of manufacturing ceramic products is known. According to the known method a ceramic powder is mixed with a rubber solution in xylene as organic material so as to make the mixture plastic enough to be suitable for shaping operations of any kind. The formed pieces are dried and shrink accordingly. The dried pieces retain flexibility, which is useful for a final shaping, as making windings.

It is the object of the present invention to provide a method of manufacturing ceramic products which are uniform in physical properties and precise in size, with a high efficiency at low cost, in particular a method of manufacturing various types of ceramic products, each type in a small quantity, such as ceramic springs or ceramic coned disks having relatively complex shapes.

According to the invention, there is provided a method of manufacturing ceramic products, which comprises the steps according to claim 1.

Further, according to the invention, there is provided a method of manufacturing a ceramic coil spring, which comprises the steps according to claim 2.

Moreover, according to the invention, there is provided a method of manufacturing a ceramic coned disk or leaf spring, which comprises the steps according to claim 3.

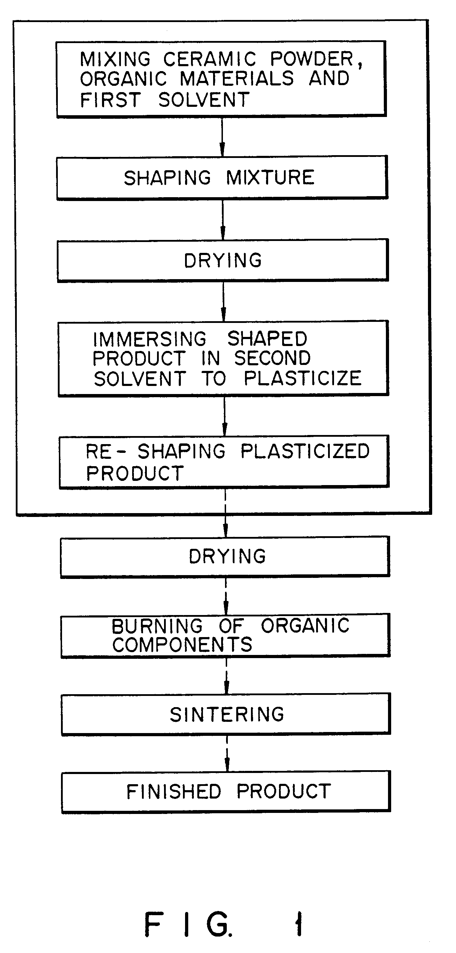

The methods according to the present invention will now be described in detail. These methods may be generally represented in Fig. 1.

The ceramic powder, which is used in the invention as the starting material, may be either an oxide ceramic or a non-oxide ceramic.

The organic materials, which are added to the ceramic powder, are those which impart plasticity and shape-sustaining property to the ceramic powder which is non-plastic, and which will be decomposed and removed from a re-shaped product while the re-shaped product is being burnt and, hence, will not remain in the sintered ceramic product. These organic materials are a binder, a plasticizer, a dispersing agent, and the like. They are known to perform the following functions. The binder renders a shaped product sufficiently strong. The plasticizer makes the ceramic mixture plastic and soft. The dispersing agent disperses, in a first solvent, the other organic materials mixed with the ceramic powder, so as to reduce the necessary amount of the solvent which must be used to dissolve these organic materials.

The binder used in this invention is either one which can be dissolved by water, such as methylcellulose, polyvinyl alcohol, water-soluble urethane, or a copolymer of polymethacrylate. Alternatively, it can be one which can be dissolved by an organic solvent, such as polyvinyl butyral, polyacrylate, or polymethacrylate.

The first solvent, which is used in the present invention, is preferably such one as will dissolve the organic materials which impart formability to the ceramic powder, whereby the organic materials throughly mix with the ceramic powder.

According to the present invention, the ceramic powder, the organic materials, and a first solvent are mixed in a predetermined ratio, thereby preparing a mixture. Then, the mixture is shaped by means of extruding or doctor-blade method etc., thereby forming a product of a comparatively simple shape, such as a sheet or a wire. These shaped products are dried, thus removing the first solvent from the shaped products and also causing the products an adequate drying shrinkage. The shaped product, which has undergone dry-shrinking, can hardly be plastic.

The second solvent used in the invention is one which can soften the binder but is a poor solvent to the binder, and can yet dissolve the plastic components of the mixture, i.e., the plasticizer, the dispersing agent, and the low-molecular component of the binder. Preferably, the second solvent is such one as has a small surface tension, readily wets the shaped product, and eveporates from the surface of the product at controlled speed. Several solvents can be used as the second solvent, among which are: alcohol, ketone, aromatic hydrocarbon, aliphatic hydrocarbon, alycrylic hydrocarbon, chlorinated hydrocarbon. These solvents may be used either singly or in combination. Nonetheless, it is desirable that a mixture of two or more of these solvents be used as the second solvent. When a mixture solvent is used, it is easier to control the speed at which the second solvent evaporates from the surface of the re-shaped product. The selection of the second solvent largely depends on what is used as the binder.

When the shaped product of a simple shape is immersed in the second solvent, the solvent will enter the product through pores formed in the surface region of the product. The interparticle solvent and the solvent adsorbed to the surfaces of the ceramic particles renders the product sufficiently plastic. The second solvent also softens the binder, thereby plasticizing the product. Since the shaped product possesses an adequate plasticity once it has been immersed in the second solvent, it can be successfully re-shaped, even if it is a thin sheet or a slender wire, into a product having a precise size.

The second solvent is evaporated from the re-shaped product, thereby drying the product. During the drying process, the re-shaped product inevitably shrinks. However, the dry-shrinkage is negligible, since the second solvent is a poor solvent to the binder, that is, a fractional amount of the solvent is contained in the binder. In addition, the re-shaped product long maintains its shape since the plastic components have been extracted from the shaped product being immersed in the second solvent. Hence, the finished ceramic product has a great dimensional precision.

In the case where die pressing is employed to reshape the plasticized product, there is no need to apply a high pressure on the product, or to use a very hard die. Furthermore, the shaped products which have simple shapes can be stored in a fully dried condition, so that they can be re-shaped into any desired shapes at any time required.

The second solvent can be one which contains a compound having isocyanate groups. The shaped product is immersed in the second solvent and is made to be plastic, and is subsequently re-shaped. The re-shaped product is then heated. As a result, the compound having isocyanate groups reacts with the organic components having functional groups such as hydroxyl group, and they are hardened. Thus, the organic components do not soften while the re-shaped product is heated to burn them. The re-shaped product can, therefore, retains its shape. In other words, the product can have a precise size and can thus be made with a high yield.

Other objects and advantages of the present invention will become apparent in the following description of preferred embodiments of the invention taken in conjunction with the drawings.
Fig. 1 is a block diagram explaining a method of manufacturing ceramic products, in accordance with this invention;
Fig. 2 is a block diagram illustrating a method of manufacturing ceramic coil springs, in accordance with a first embodiment of the present invention;
Fig. 3 is a diagram explaining how a ceramic coil spring is made by the method shown in Fig. 2;
Fig. 4 is a block diagram illustrating a method of manufacturing ceramic cups, in accordance with a second embodiment of this invention;
Figs. 5A to 5C are diagrams explaining how a ceramic cup is made by the method shown in Fig. 4;
Fig. 6 is a block diagram illustrating a method of manufacturing ceramic coned disk springs, in accordance with a third embodiment of this invention;
Fig. 7 is a sectional view showing the ceramic coned disk spring made by the method shown in Fig. 6;
Fig. 8 is a block diagram showing a method of manufacturing ceramic watch glasses, in accordance with a fourth embodiment of the present invention;
Figs. 9A and 9B are a sectional view and a plan view, respectively, showing the ceramic watch glass manufactured by the method illustrated in Fig. 8;
Fig. 10 is a block diagram explaining a method of manufacturing ceramic coned disk springs, according to a fifth embodiment of the invention; and
Fig. 11 is a sectional view, showing the ceramic coned disk spring manufactured by the method shown in Fig. 10.

The present invention will now be described in detail, with reference to some embodiments. Nonetheless, the invention is not limited to these embodiments.

### Example 1

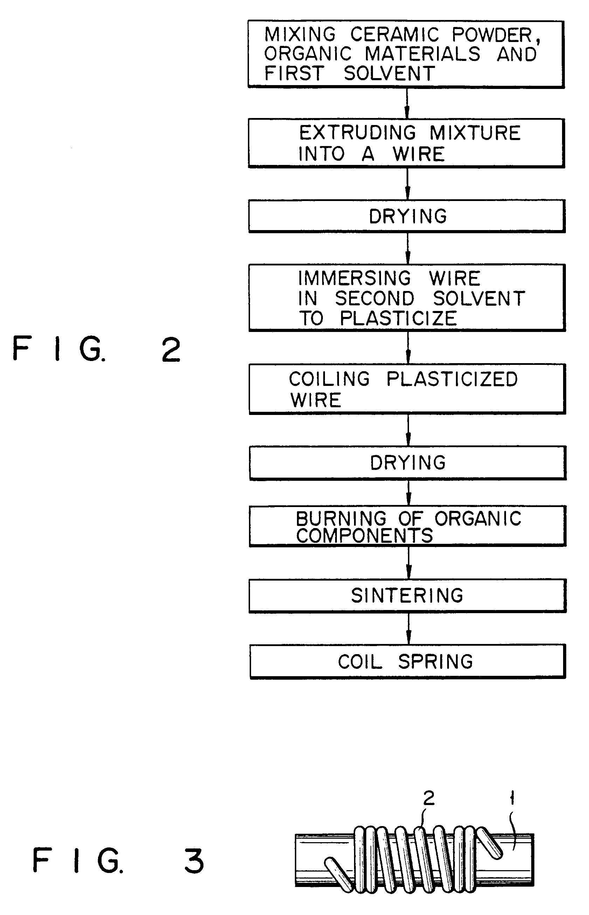

Ceramic coil springs were manufactured by the method shown in Fig. 2. First, 100 parts by weight of partially stabilized zerconia, 4 parts by weight of methylcellulose, 4 parts by weight of polyethylene grycol (number average molecular weight: 400), 4 parts by weight of glycerin, 0.5 parts by weight of polycarboxylic acid ammonium salt, and 16 parts by weight of water (used as the first solvent) were mixed together, thus preparing a mixture. Then, the mixture was shaped into wires having a diameter of 0.55 mm by means of an extruder. These wires were dried until they shrinked completely to have their diameter reduced to 0.52 mm. Thereafter, the dry-shrinked wires were kept immersed for one minutes or more in a bath of a mixture solvent (used as the second solvent) consisting of 50 vol% of ethyl alcohol and 50 vol% of isopropyl alcohol. As a result, the wires became plastic. Then, as is shown in Fig. 3, each wire 2 was wound around core rod 1, re-shaped into a coil having an average diameter of 10.0 mm, a length of 11 mm, and eight turns of which six are effective turns. Further, wire 2, now in the form of a coil, was dried, thus removing the second solvent from it. Wire 2 was removed from core rod 1. The organic components contained in the coil were burnt and removed from the coil. The coil was then sintered, thus manufacturing a ceramic coil spring.

In this method, each coil shrinked but very little after the second solvent had been removed from it. Furthermore, since the plastic components were dissolved from the wires into the second solvent while wires were being immersed in the second solvent, the coils made of these wires retained their shapes well even after the drying process. Therefore, the difference in size among the finished ceramic coil springs was sufficiently small. As a result, ceramic coil springs were manufactured with a very high yield.

A method of manufacturing ceramic coil springs is known, as is disclosed in Japanese Patent Disclosure No. 62-7659. In this method, ceramic powder, methylcellulose, a surfactant, polyhydric alcohol, and water are mixed, thus preparing a mixture. The mixture is shaped into wires by extruding. Each wire is coiled, after its moisture content has been adjusted. The coil made of the wire is dried and sintered, thereby manufacturing a ceramic coil spring. The inventors performed this conventional method, thus manufacturing ceramic coil springs. They found that the coils shrinked very much during the drying process, and were considerably different in size from one another. Consequently, the yield was low. Further, the coils failed to retain their shape sufficiently, and it was necessary to sinter the coils, while keeping them wound around the core rods.

In Example 1, wires 2 were wound around core rods 1, and thus re-shaped into coils. Instead, they can be coiled by means of a lathe-type coiling machine.

### Example 2

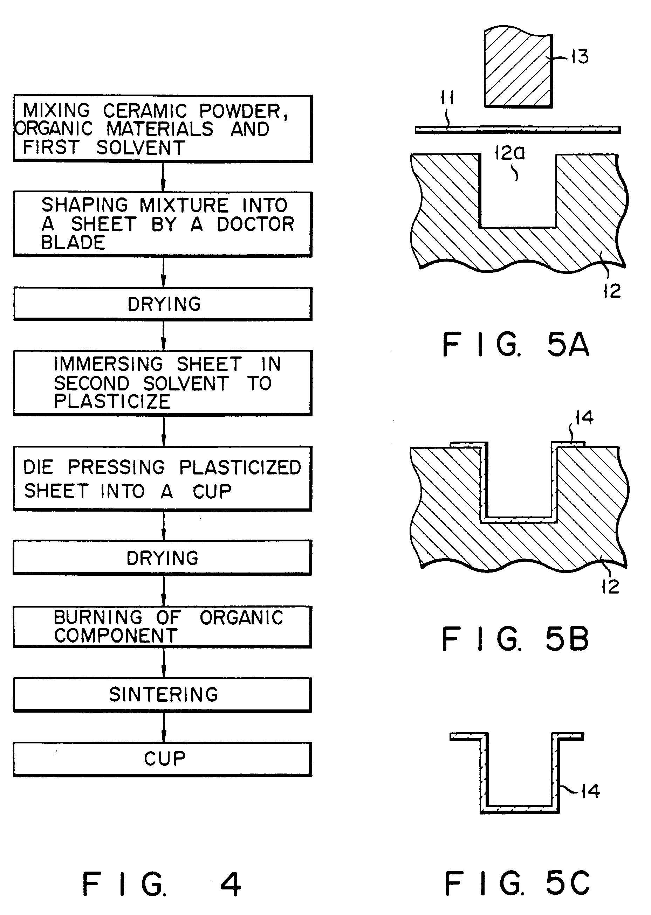

Ceramic cups were manufactured by the method illustrated in Fig. 4. First, 100 parts by weight of alumina, 4 parts by weight of copolymer of polyacrylate, 4 parts by weight of polyethylene glycol (number average molecular weight: 400), 0.5 parts by weight of polycarboxylic acid ammonium salt, and 54 parts by weight of water (used as the first solvent) were mixed, thus preparing a mixture. Then, the mixture was shaped into 1.0 mm-thick sheets by means of doctor-blade method. These sheets were dried until they shrinked completely to have their thickness reduced to 0.6 mm. Thereafter, the dry-shrinked sheets were kept immersed for one minute or more in a bath of a mixture solvent (used as the second solvent) consisting of 50 vol% ethyl alcohol and 50 vol% of isopropyl alcohol. As a result, the sheets became plastic. Then, as is shown in Figs. 5A to 5C, each sheet was re-shaped by means of die pressing, into cups 14. More specifically, sheet 11, which had been immersed in the second solvent, was placed on die 12 having recess 12a, then pressed with punch 13 shaped complemental to recess 12a, and thus re-shaped into cup 14. Finally, cup 14 was removed from die 12. Thereafter, cup 14 was dried, thus removing the second solvent from it. The organic components contained in the cup 14 were burnt and removed from the cup 14. The cup 14 was sintered, thus manufacturing a ceramic cup.

For a comparative purpose, the same materials as had been used in Example 2 were mixed in the same ratio as in Example 2, thus preparing a mixture, this mixture was shaped by the doctor-blade method, into sheets of the same thickness as in Example 2, and the moisture content of these sheets was adjusted as in the conventional method. These sheets was re-shaped into cups by means of die pressing. The cups were dried, and shrinked so much that cracks were made in the cups.

Also, for a comparative purpose, the same materials as had been used in Example 2 were mixed in the same ratio as in Example 2, thus preparing a mixture. The mixture was subjected to slip casting, into cups. The slip casting failed to shape cups, whose wall thicknesses were 1 mm or less.

### Example 3

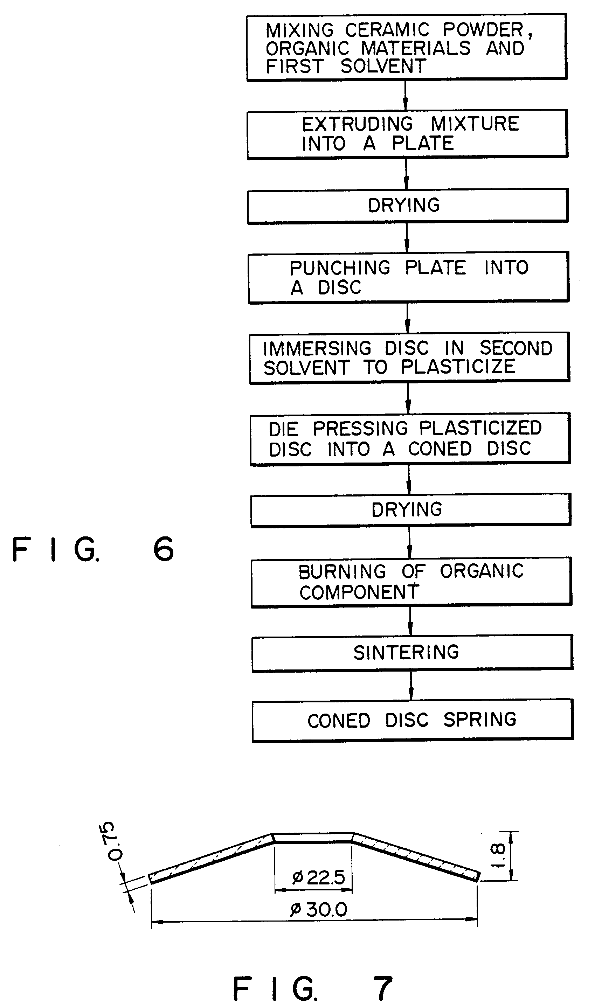

Ceramic coned disk springs were manufactured by the method illustrated in Fig. 6. First, the same materials as those used in Example 1 were mixed in the same ratio as in Example 1, thus preparing a mixture. Then, the mixture was shaped by means of an extruder, into plates having a width of 50 mm and a thickness of 1 mm. These plates were dried until they shrinked completely. The plates were then punched, whereby disks having an outside diameter of 40 mm and an inside diameter of 30 mm were made. These disks were immersed in a bath of mixture solvent (used as the second solvent) consisting of 50 vol% of isopropyl alcohol and 50 vol% of trichloroethylene. As a result, the disks become plastic. Then, each disk was re-shaped into coned disk by means of die pressing. The coned disk was dried. The organic components were burnt and removed from the coned disk. The coned disk was sintered at 1450°C, thus manufacturing a ceramic coned disk spring, as is illustrated in Fig. 7.

For a comparative purpose, the same mixture as had been prepared in Example 1 was pelletized, and then subjected to die pressing as in the conventional method, thus shaping it directly into coned disks. It was found that no coned disks having a thickness of 1 mm or less could be shaped by this method.

In Example 3, the plates were punched, thereby shaping disks, these disks were immersed in the second solvent, and they were re-shaped into coned disks. Instead, the plates can be immersed in the second solvent, and then punched, thus re-shaping disks, which were simultaneously re-shaped into coned disks.

Leaf springs of various shapes can be manufactured by the same method as Example 3.

### Example 4

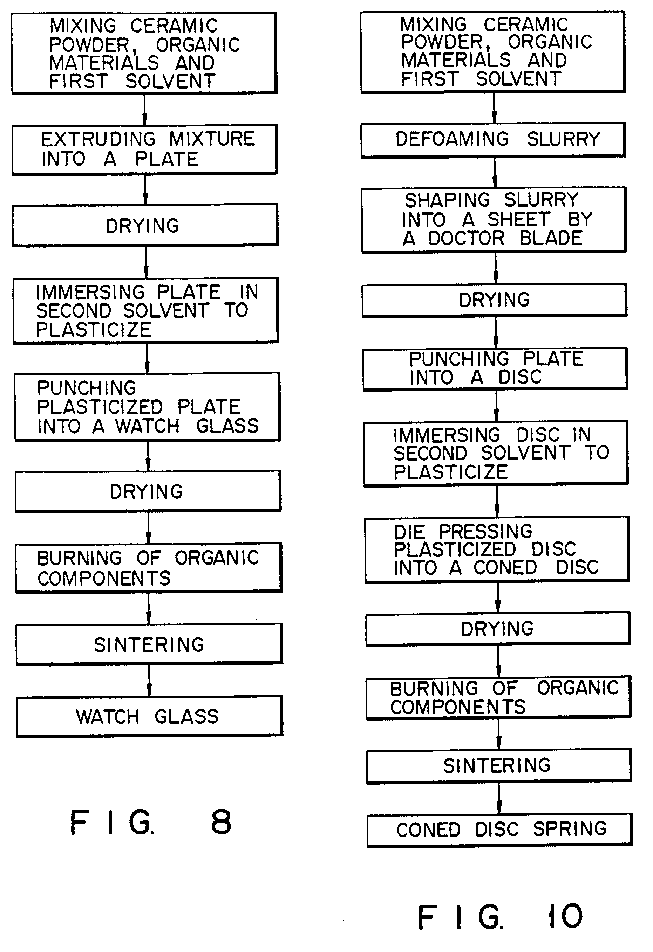

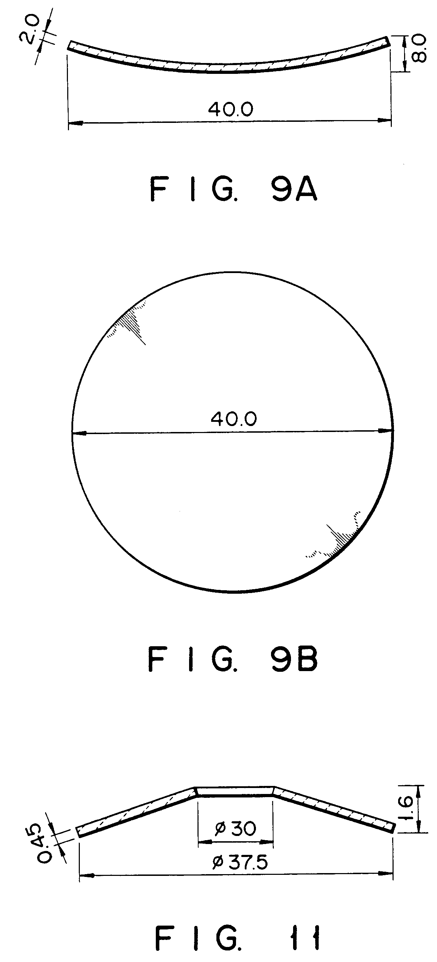

Watch glasses were manufactured by the method illustrated in Fig. 8. First, the same materials as those used in Example 1 were mixed in the same ratio as in Example 1, thus preparing a mixture. Then, the mixture was shaped by means of an extruder, into plates having a width of 50 mm and a thickness of 2 mm. These plates were dried until they shrinked completely. The plates were immersed in a bath of a mixture solvent (used as the second solvent) consisting of 50 vol% of ethyl alcohol and 50 vol% of trichloroethylen. As a result, the plates become plastic. Then, each plate was re-shaped into a watch glass, as is shown in Figs. 9A and 9B, by means of die pressing. The watch glass was dried. The organic components contained in the watch glass were burnt and removed from the watch glass. The watch glass was sintered at 1450°C, thus manufacturing a ceramic watch glass. The watch glass was not distorted in the sintering process, and the yield was sufficiently high.

For a comparative purpose, the same mixture as had been prepared in Example 1 was pelletized, and the subjected to die pressing as in the conventional method, thus shaping it directly into watch glasses. It was found that the shaped products obtained by the die pressing exhibited a non-uniform density, and were deformed when they were sintered. No watch glasses having the desired shape could be manufactured.

### Example 5

Coned disk springs were manufactured by the method shown in Fig. 10. First, 100 parts by weight of alumina, 7 parts by weight of polyvinyl alcohol, 4 parts by weight of polyethylene glycol (number average molecular weight: 400), 3 parts by weight of butylbenzyl phthalate, 0.5 parts by weight of polycarboxylic acid ammonium salt, 2 parts by weight of wax-based emulsion (used as a defoaming agent), and 60 parts by weight of water (used as the first solvent) were mixed, thus preparing a slurry. Then, the slurry was shaped into sheets by means of doctor-blade method. These sheets were dried until they shrinked completely to have their thickness reduced to 0.6 mm. Thereafter, the sheets were punched, thus shaping disks having an outside diameter of 50 mm and an inside diameter of 40 mm. Then, these disks were immersed in a bath of a mixture solvent (used as the second solvent) consisting of 50 vol% of ethyl alcohol and 50 vol% of trichloroethylene. Hence, the disks became plastic. Then, each disk was re-shaped by means of die pressing, into coned disk. The coned disk was dried. The organic components contained in the conned disk was burnt and removed from the coned disk. The coned disk was sintered at 1600°C, thus manufacturing a ceramic coned disk spring, as is illustrated in Fig. 11.

For a comparative purpose, the same mixture as had been prepared in Example 5 was pelletized, and then subjected to die pressing, thus shaping it directly into coned disks, and these coned disks were dried and sintered, as in the conventional method. It was found that the resultant coned disk springs failed to have the desired shape or size.

### Example 6

Ceramic coil springs were manufactured by the method shown in Fig. 2. First, 100 parts by weight of partially stabilized zerconia, 4 parts by weight of methylcellulose, 4 parts by weight of polyethylene grycol (number average molecular weight: 400), 4 parts by weight of glycerin, 0.5 parts by weight of polycarboxylic acid ammonium salt, and 17 parts by weight of water (used as the first solvent) were mixed together, thus preparing a mixture. Then, the mixture was shaped into wires having a diameter of 2.0 mm by means of an extruder. These wires were dried until they shrinked completely to have their diameter reduced to 1.9 mm. Thereafter, the dry-shrinked wires were kept immersed for one minute or more in a bath of a mixture solvent (used as the second solvent) consisting of 50 wt% of trichloroethylene, 20 wt% of tetrachloroethylene and 30 wt% of T-65 (2,4-tolylenediisocyanate: 2,6-tolylenediisocyanate = 65 : 35 in molar fraction). As a result, the wires became plastic. Then, each wire 2 was wound around core rod 1 having a diameter of 15 mm, re-shaped into a coil. Further, wire 2, now in the form of a coil, was heated at 80°C. Wire 2 was removed from core rod 1. The organic components contained in the coil were burnt and removed from the coil. The coil was then sintered, thus manufacturing a ceramic coil spring.

In this method, isocyanate groups react with hydroxyl groups of methylcellulose and other organic components when the coils are heated at 80°C, and they are hardened, so that the coils retained their shapes well while the coils are heated to burn the organic components. Therefore, the difference in size among the finished ceramic coil springs was sufficiently small. As a result, ceramic coil springs were manufactured with a very high yield.

## Claims

1. A method of manufacturing ceramic products, characterized by comprising the steps of:
mixing ceramic powder, organic materials imparting formability to the ceramic powder which comprise a binder and a plasticizer, and a first solvent capable of dissolving said binder and plasticizer, thereby preparing a mixture;
shaping the mixture, thereby forming a product of a simple shape;
drying the product;
immersing the dried product in a bath of a second solvent capable of dissolving the plasticizer and softening the binder, thereby plasticizing the product; and
re-shaping the plasticized product.

2. A method of manufacturing a ceramic coil spring, characterized by comprising the steps of:
mixing the ceramic powder, organic materials imparting formability to the ceramic powder which comprise a binder and a plasticizer, and a first solvent capable of dissolving said binder and plasticizer, thereby preparing a mixture;
extruding the mixture into a wire,
drying the wire;
immersing the dried wire in a bath of a second solvent capable of dissolving the plasticizer and softening the binder, thereby plasticizing the wire; and
coiling the plasticized wire.

3. A method of manufacturing a ceramic coned disk or leaf spring, characterized by comprising the steps of:
mixing ceramic powder, organic materials imparting formability to the ceramic powder which comprise a binder and a plasticizer, and a first solvent capable of dissolving said binder and plasticizer, thereby preparing a mixture;
shaping the mixture into a sheet-like product;
drying the sheet-like product;
immersing the dried sheet-like product in a bath of a second solvent capable of dissolving the plasticizer and softening the binder, thereby plasticizing the sheet-like product; and
re-shaping the plasticized sheet-like product into a coned disk or leaf spring.

4. The method according to one of claims 1 through 3, characterized by further comprising the steps of:
burning organic components contained in the re-shaped product, and sintering the re-shaped product.

5. The method according to one of claims 1 through 4, characterized in that said organic materials include a binder, a plasticizer, and a dispersing agent.

6. The method according to claim 5, characterized in that said binder comprises at least one element selected from the group consisting of methyl-cellulose, polyvinyl alcohol, water-soluble urethane, a copolymer of polymethacrylate, polyvinyl butyral, polyacrylate, and polymethacrylate.

7. The method according to one of claims 1 through 6, characterized in that said second solvent is an organic solvent such as alcohol, ketone, aromatic hydrocarbon, aliphatic hydrocarbon, alycrylic hydrocarbon, chlorinated hydrocarbon, or a mixture of at least two of these organic solvents.

8. The method according to one of claims 1 through 7, characterized in that said second solvent contains at least one compound having isocyanate groups.

## Patentansprüche

1. Verfahren zum Herstellen von keramischen Produkten, gekennzeichnet durch die Schritte:
Mischen von Keramikpulver, organischen Materialien, die dem Keramikpulver Formbarkeit aufprägen und die ein Bindemittel und einen Weichmacher aufweisen, und einem ersten Lösungsmittel, das in der Lage ist, das Bindemittel und den Weichmacher zu lösen, wodurch eine Mischung vorbereitet wird;
Formen der Mischung, wodurch ein Produkt einer einfachen Form gebildet wird;
Trocknen des Produktes;
Eintauchen des getrockneten Produktes in ein Bad eines zweiten Lösungsmittels, das in der Lage ist, den Weichmacher zu lösen und das Bindemittel weich zu machen, wodurch das Produkt plastisch gemacht wird, und
Umformen des plastischen Produktes.

2. Verfahren zum Herstellen einer keramischen Schraubenfeder, gekennzeichnet durch die Schritte:
Mischen des Keramikpulvers, von organischen Materialien, die dem Keramikpulver Formbarkeit aufprägen, und ein Bindemittel und einen Weichmacher aufweisen, und eines ersten Lösungsmittels, das in der Lage ist, das Bindemittel und den Weichmacher zu lösen, wodurch eine Mischung vorbereitet wird;
Strangpressen der Mischung in einen Draht;
Trocknen des Drahtes;
Eintauchen des getrockneten Drahtes in ein Bad eines zweiten Lösungsmittels, das in der Lage ist, den Weichmacher zu lösen und das Bindemittel weich zu machen, wodurch der Draht plastisch gemacht wird; und
Aufwinden des plastischen Drahtes.

3. Verfahren zum Herstellen einer keramischen konusförmigen Scheibe oder Blattfeder, gekennzeichnet durch die Schritte:
Mischen von Keramikpulver, organischen Materialien, die dem Keramikpulver Formbarkeit aufprägen und die ein Bindemittel und einen Weichmacher aufweisen, und eines ersten Lösungsmittels, das in der Lage ist, das Bindemittel und den Weichmacher zu lösen, wodurch eine Mischung vorbereitet wird;
Formen der Mischung in ein plattenartiges Produkt;
Trocknen des plattenartigen Produktes;
Eintauchen des getrockneten plattenartigen Produktes in ein Bad eines Zweiten Lösungsmittels, das in der Lage ist, den Weichmacher zu lösen und das Bindemittel weich zu machen, wodurch das plattenartige Produkt plastisch gemacht wird; und
Umformen des plastischen plattenartigen Produktes in eine konusförmige Scheibe oder Blattfeder.

4. Verfahren nach einem der Ansprüche 1 bis 3, gekennzeichnet durch die weiteren Schritte:
Verbrennen von in dem umgeformten Produkt enthaltenen organischen Komponenten und Sintern des umgeformten Produktes.

5. Verfahren nach einem der Ansprüche 1 bis 4, dadurch gekennzeichnet, daß die organischen Materialien ein Bindemittel, einen Weichmacher und ein Verteilungsmittel aufweisen.

6. Verfahren nach Anspruch 5, dadurch gekennzeichnet, daß das Bindemittel mindestens ein Element aufweist, das aus der Gruppe ausgewählt ist, die aus Methylzellulose, Polyvinylalkohol, wasserlösliches Urethan, ein Copolymer von Polymethacrylat, Polyvinybutyral, Polyacrylat und Polymethacrylat besteht.

7. Verfahren nach einem der Ansprüche 1 bis 6, dadurch gekennzeichnet, daß das zweite Lösungsmittel ein organisches Lösungsmittel wie Alkohol, Keton, aromatischer Kohlenwasserstoff, aliphatischer Kohlenwasserstoff, alycrylischer Kohlenwasserstoff, chlorierter Kohlenwasserstoff oder eine Mischung von mindestens zwei dieser organischen Lösungsmittel ist.

8. Verfahren nach einem der Ansprüche 1 bis 7, dadurch gekennzeichnet, daß das zweite Lösungsmittel mindestens eine Verbindung enthält, die Isocyanatgruppen aufweist.

## Revendications

1. Procédé de fabrication de produits céramiques, caractérisé en ce qu'il comprend les étapes suivantes :
le mélange d'une poudre céramique, de matériaux organiques donnant de l'ouvrabilité à la poudre céramique et qui contiennent un liant et un plastifiant, et un premier solvant capable de dissoudre le liant et le plastifiant, afin qu'un mélange soit préparé,
la mise en forme du mélange afin qu'il forme un produit de configuration simple,
le séchage du produit,
l'immersion du produit séché dans un bain d'un second solvant capable de dissoudre le plastifiant et de ramollir le liant si bien que le produit est plastifié, et
la remise en forme du produit plastifié.

2. Procédé de fabrication d'un ressort hélicoïdal céramique, caractérisé en ce qu'il comprend les étapes suivantes :
le mélange de la poudre céramique, de matériaux organiques donnant de l'ouvrabilité à la poudre céramique et qui contiennent un liant et un plastifiant, et d'un premier solvant capable de dissoudre le liant et le plastifiant, si bien qu'un mélange est préparé,
l'extrusion du mélange sous forme d'un fil,
le séchage du fil,
l'immersion du fil séché dans un bain d'un second solvant capable de dissoudre le plastifiant et de ramollir le liant, si bien que le fil est plastifié, et
l'enroulement du fil plastifié.

3. Procédé de fabrication d'un ressort à lame ou à disque céramique de forme conique, caractérisé en ce qu'il comprend les étapes suivantes :
le mélange d'une poudre céramique, de matériaux organiques donnant de l'ouvrabilité à la poudre céramique et qui contiennent un liant et un plastifiant, et d'un premier solvant capable de dissoudre le liant et le plastifiant, afin qu'un mélange soit préparé,
la mise du mélange sous forme d'un produit analogue à une feuille,
le séchage du produit analogue à une feuille,
l'immersion du produit séché analogue à une feuille dans un bain d'un second solvant capable de dissoudre le plastifiant et de ramollir le liant si bien que le produit en forme de feuille est plastifié, et
la remise en forme du produit plastifié en forme de feuille afin qu'il forme un ressort à lame ou un disque de configuration conique.

4. Procédé selon l'une des revendications 1 à 3, caractérisé en ce qu'il comprend en outre l'étape suivante :
la combustion des ingrédients organiques contenus dans le produit remis en forme, et le frittage du produit remis en forme.

5. Procédé selon l'une des revendications 1 à 4, caractérisé en ce que les matières organiques comprennent un liant, un plastifiant et un agent dispersant.

6. Procédé selon la revendication 5, caractérisé en ce que le liant est formé par au moins un élément choisi dans le groupe qui comprend la méthylcellulose, l'alcool polyvinylique, un uréthanne hydrosoluble, un copolymère de polyméthacrylate, du butyral polvvinylique, un polyacrylate et un polyméthacrylate.

7. Procédé selon l'une des revendications 1 à 6, caractérisé en ce que le second solvant est un solvant organique tel qu'un alcool, une cétone, un hydrocarbure aromatique, un hydrocarbure aliphatique, un hydrocarbure alicyclique, un hydrocarbure chloré ou un mélange d'au moins deux de ces solvants organiques.

8. Procédé selon l'une des revendications 1 à 7, caractérisé en ce que le second solvant contient au moins un composé ayant des groupes isocyanates.
